# EUROPEAN PATENT APPLICATION

(11) **EP 2 360 493 A1**
(43) Date of publication of application: **24.08.2011**
(21) Application number: 10001529.6
(22) Date of filing: 15.02.2010
(51) Int. Cl.: G01T 1/29

(54) **Detector arrangement for a tomographic imaging apparatus, particularly for a positron emission tomograph**

(71) Applicant: Bergen Teknologioverforing AS, 5006 Bergen (NO)
(72) Inventor: Eigen, Gerald, 5227 Nestun (NO)
(74) Representative: Beier, Ralph

(57) **Abstract**

The invention relates to a detector arrangement (21) for a tomographic imaging apparatus, particularly for a positron emission tomograph. The detector arrangement (21) according to the invention comprises at least two sandwiched pairs of a scintillator (22-24) and an associated photodetector (25-27), wherein the pairs are sandwiched along a direction of detection.

## Description

### Field of the invention

The invention relates to a detector arrangement for a tomographic imaging apparatus, particularly for a positron emission tomograph (PET).

Further, the invention relates to a detector ring comprising a plurality of the detector arrangements according to the invention and a tomographic imaging apparatus comprising such a detector ring.

Moreover, the invention relates to an operating method for a tomographic imaging apparatus, particularly for a positron emission tomograph.

### Background of the invention

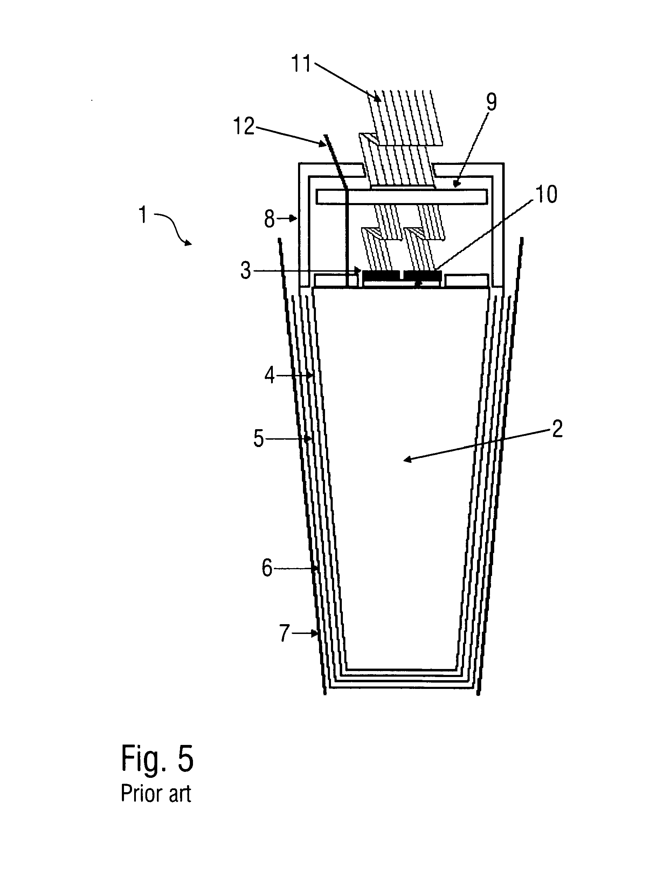

Positron emission tomography (PET) is a nuclear medicine imaging technique producing three-dimensional images of functional processes in the body. The conventional PETs comprise a detector ring for detection of Gamma rays emitted indirectly by a positron-emitting radio nuclide (tracer), which is introduced into the body on a biologically active molecule. The conventional detector rings currently used in PETs comprise a plurality of detector arrangements which are arranged along the circumference of the detector ring, wherein a typical detector arrangement 1 is shown in Figure 5. Such a detector arrangement can be used, for example, in high-energy physics.

The conventional detector arrangement 1 essentially consists of a scintillator crystal 2 and an associated silicon photodiode 3 in the form of a pixelated avalanche photodetector operated in the Geiger-mode. In this embodiment, the scintillator crystal 2 consists of caesium iodide doped with thallium, i.e. CsI(T1). Further, the scintillator crystal 2 is wrapped with a diffuse white reflector fabric 4 made of Tyvec^{Ⓡ} to catch light that has left the scintillator crystal 2 at its side surfaces. Further, the scintillator crystal 2 is wrapped in an aluminum foil 5 constituting a radio frequency shielding. Moreover, the scintillator crystal 2 is wrapped in a Mylar^{Ⓡ} foil 6 providing an electrical insulation. Finally, the entire detector arrangement 1 is housed in a compartment 7 made of carbon fibre-reinforced carbon (CFC) providing mechanical support. The photodiode 3 is housed in an aluminum frame 8 which is also housing a preamplifier board 9. The silicon photodiode 3 is arranged on a diode carrier plate 10 and there is an output cable 11 and a fibre optical cable 12 connected to a light pulser.

However, it should be noted that the conventional detector arrangement 1 as shown in Figure 5 merely comprises a single scintillator crystal 2 and the associated photodiode 3. Therefore, the detector ring assembled from the conventional detector arrangements 1 merely comprises a single layer of the scintillator crystals 2. Hence, the detection performance of these conventional detector arrangements and the corresponding detector rings is unsatisfactory.

### Summary of the invention

It is therefore an object of the invention to provide an improved detector arrangement and a corresponding detector ring for a tomographic imaging apparatus, particularly for a positron emission tomograph.

Further, it is an object of the invention to provide an operating method for the detector ring according to the invention providing an improved detection performance.

Preferably, the detector comprises a high granularity and also a high efficiency. Further, the detector preferably comprises an excellent position and time resolution.

The invention is based on the idea that some of the Gamma photons generated by the positron-electron annihilations are Compton-scattered in the detector ring, which results in a primary photon detection and a secondary photon detection both having an energy of less than the annihilation energy of 511 keV. Therefore, these less energetic primary photon detections are discarded in conventional PETs although they are caused by positron-electron annihilations.

Therefore, the detector arrangement according to the invention comprises at least two sandwiched pairs of a scintillator (e.g. an inorganic scintillator crystal) and an associated photodetector, e.g. a multi-pixel photo counter (MPPC) or a silicon photomultiplier (SiPM), wherein the pairs are sandwiched along a direction of detection, so that the corresponding detector ring comprises several layers of scintillators and the associated photodetectors. Therefore, the detector ring according to the invention is suitable for detecting Compton-scattered Gamma photons thereby improving the detection performance.

In a preferred embodiment, the detector arrangement comprises three sandwiched pairs of a scintillator and an associated photodetector, wherein the pairs are sandwiched along a direction of detection. However, the invention is not restricted to a specific number of layers of scintillators in the detector ring. For example, detector rings with two, four, five or six layers of scintillators are possible.

Further, it should also be noted that the detector arrangement preferably tapers along its direction of detection so that a plurality of detector arrangements can be assembled to form a detector ring without any optically inactive gaps between the adjacent detector arrangements. In the preferred embodiments, the scintillators therefore comprise a cross section in the form of a trapezoid or a hexagon.

Further, the detector arrangement according to the invention preferably comprises an optical insulation for optically insulating the detector arrangement from an adjacent detector arrangement in a detector ring which is assembled from a plurality of the detector arrangements. The optical insulation between the adjacent detector arrangements avoids crosstalk between the adjacent detector arrangements.

The optical insulation between the adjacent detector arrangements preferably comprises a diffuse reflector on the opposing side surfaces of the scintillators. For example, a diffusely reflecting white paint can be applied onto the opposing side surfaces of the scintillators to provide the optical insulation. Alternatively, the optical insulation can be provided by a cladding made of a fabric, particularly a fabric made of Tyvek^{Ⓡ}. Further, the optical insulation between the adjacent detector arrangements can be provided by an enhanced roughness of the opposing side surfaces of the scintillators so that the light is trapped within the scintillator. Finally, the optical insulation can be provided by nanocrystals on the opposing side surfaces of the scintillators. However, the invention is not restricted to the afore-mentioned techniques for providing the optical insulation between the adjacent detector arrangements in the detector ring.

Further, the side surfaces of the scintillators preferably comprise an optical pattern (e.g. black spots) which homogenizes the response of the scintillators. The afore-mentioned optical pattern for homogenizing the response of the scintillators is preferably arranged between the scintillators and the optical insulation.

It should further be noted that the individual scintillators preferably comprise a front face of 4 mm² ± 0.2 mm² on the receiving side. Moreover, the length of the entire detector arrangement is preferably 4.8 cm ± 0.5 cm, while the length of the individual scintillators is preferably 1.6 cm ± 0.2 mm or 1.4 cm ± 0.4 mm. However, the invention is not restricted to the afore-mentioned exemplary dimensions.

It should further be noted that different types of photodetectors can be used in the framework of the invention. In a preferred embodiment of the invention, the photodetectors associated to the individual scintillators are pixelated avalanche photodiodes (APDs) operated in the Geiger-mode, e.g. silicon photo multipliers (SiPMs), multi-pixel photo counters (MPPCs) or pixelated semiconductor photodetectors. Finally, it is preferred to use a photodetector which is insensitive to magnetic fields, for example an avalanche photodiode operated in the Geiger mode. However, the invention is not restricted to the afore-mentioned types of photodetectors.

Further, the scintillators are preferably scintillator crystals, particularly inorganic scintillator crystals. For example, the following inorganic scintillator crystals can be used in the framework of the invention: Lutetium orthosilicate (LSO), lutetium-yttrium orthosilicate (LSYO), barium fluoride BaF₂), lead tungstate (PbWO₄), bismuth germanate (BGO), caesium iodide (CsI), caesium iodide doped with thallium (CsI(T1)), sodium iodide doped with thallium (NaI(T1)), lanthanum-(III)-bromide (LaBr₃) or lutetium-yttrium aluminum perovskite (LUYAP).

Alternatively, it is possible to use organic scintillators having a shorter decay time facilitating a run time calculation thereby improving the detection performance.

Therefore, at least one of the scintillators preferably may comprise a shorter decay time than the other scintillators thereby facilitating a precise run-time calculation. In a three-layer arrangement, two of the scintillators may consist of inorganic scintillator crystals while the other scintillator is an organic scintillator having a shorter decay time thereby facilitating a precise run-time calculation. For example, the decay time of the inorganic scintillators is typically longer than 20 ns while the shorter decay time of the organic scintillators is typically less than 5 ns.

It should further be noted that the individual detector arrangements are preferably inserted in corresponding slots of a box which is preferably made of carbon-fibre. These boxes can be closed with a plate holding the individual photodetectors for the scintillators in the slots. For example, each of the boxes can have a size of 1 cm x 1 cm in the first layer and follows the projective geometry in the azimuthal direction and/or in the polar direction. Further, each box may include 25 crystals which are inserted in the slots of the box. However, the invention is not restricted to the afore-mentioned numbers of slots and dimensions.

Moreover, it should be noted that the invention is not restricted to the individual detector arrangements as disclosed above. The invention rather comprises a complete detector ring for a tomographic imaging apparatus, particularly for a positron emission tomograph, comprising a plurality of the afore-mentioned detector arrangements being arranged along the circumference of the detector ring so that the detector ring consists of several layers of scintillators and associated photodetectors.

The detector ring according to the invention preferably has an inner diameter of 60-100 cm and an axial length of 100 cm or more for a full-body PET. However, in case of a small PET, the axial length is preferably in the range of 5-50 cm having a diameter of preferably 30-60cm.

It should further be noted that the individual detector arrangements in the detector ring are preferably projective with regard to an azimuth angle of the detector ring. In other words, the individual detector arrangements each comprise an optical axis wherein the optical axes of all detector arrangements intersect in the middle of the detector ring, i.e. on the centre axis of the detector ring.

In case of a full-body PET with an axial length of 100 cm or more, the individual detector arrangements are preferably projective with regard to a polar angle of the detector ring. In other words, the individual detector arrangements are preferably angled with regard to a cross section of the detector ring so that the optical axes of all detector arrangements intersect substantially in the same cross section of the detector ring.

Moreover, the invention encompasses a complete tomographic imaging apparatus, particularly a positron emission tomograph, comprising the afore-mentioned detector ring.

Finally, the invention also encompasses a novel operating method for a tomographic imaging apparatus, particularly for a positron emission tomograph. The novel operating method according to the invention facilitates the detection of Compton-scattered Gamma photons thereby improving the detection performance of the tomographic imaging apparatus. Due to the small crystal sizes the compton scattered photons are more precisely determined.

In conventional positron emission tomographs, the positions and energies of diametrically opposite primary photon detections are determined and the positions of the diametrically opposite primary photon detections are saved for a later image analysis if both diametrically opposite primary photon detections comprise a predetermined annihilation energy of typically 511 keV. However, if the photon detections comprise a lower energy due to Compton-scattering, the corresponding positions are discarded and not used for the later image analysis.

However, the operating method according to the invention also determines the positions and energies of secondary photon detections caused by Compton-scattering of the less energetic primary photon. In other words, if one of the primary photon detections comprises the specific annihilation energy of typically 511 keV, while the other primary photon detection comprises a lower energy due to Compton-scattering, the position and energy of the secondary photon detection is determined.

If the less energetic primary photon detection and the secondary photon detection comprise a total energy corresponding to the specific annihilation energy of typically 511 keV, the positions of the primary photon detections are saved for a later image analysis. In such a case, it is clear that the less energetic secondary photon detection was caused by Compton-scattering of the primary photon.

However, if the total energy of the more energetic primary photon detection and the secondary photon detection does not correspond to the annihilation energy of typically 511 keV, it cannot be concluded that the secondary photon detection was caused by Compton-scattering of the primary photon. In such a case, the positions of the primary photon detections are discarded so that they are not used for image analysis.

In a preferred embodiment of the invention, the operating method also considers events in which both primary photon detections comprise an energy of less than the specific annihilation energy of typically 511 keV. In such a case, it is determined whether there are any secondary photon detections having an energy matching with the energy of the primary photon detections in such a way that the sum of the energies corresponds to the specific annihilation energy of typically 511 keV. In such a case, the positions of the primary photon detections are saved for a later image analysis.

It should further be noted that the search for the secondary photon detections is preferably restricted to a specific region in which the secondary photon detections are to be expected according to the energy of the corresponding primary photon detection. The multi-layer and highly granular structure allows for a precise detection of the compton scattered photons. In this connection it should be noted that the Compton-scattering angle corresponds to the difference between the specific annihilation energy on the one hand and the energy of the primary photon detection on the other hand. Therefore, noise related misdetections can be avoided by restricting the search to a specific region corresponding to the Compton-scattering angle. Specifically, the Compton-scattering angle is calculated based on the energy difference between the energy of the primary photon detection and the specific annihilation energy of typically 511 keV. Then, a cone is determined surrounding the flight path of the less energetic primary photon before its detection, wherein the cone corresponds to the Compton-scattering angle. Then, the search for the secondary photon detection is restricted to the cone.

In the preferred embodiment of the invention, the apparatus is calibrated without a patient by inserting a source of radiation and measuring data. The source of radiation used for calibrating the apparatus is preferably a point source, e.g. a Natrium-22 source. However, other source of radiation can be used in the framework of the invention, e.g. Caesium-137, Sodium-22, Cobalt-57, Tin-113 or Barium-133. Further, the invention is not restricted to the afore-mentioned examples of radiation sources.

The pixelated APDs operated in the Geiger mode are non linear devices that saturate at the maximum number of pixels available. For good energy measurements one needs to correct for this non-linearity. The non-linearity correction is preferably obtained from the saturation curves. The exact saturation curve needs to be measured for every photodetector. The saturation curves are voltage and temperature dependent. Thus, the calibration system needs to have the ability to measure the saturation at any time. It is proposed to accomplish this with several X-ray sources of fixed energy, e.g. Caesium-137 (662 keV), Sodium-22 (511 keV), Cobalt-57 (122 KeV), Tin-113 (392 keV + X rays) or Barium-133 (356 keV, 0.081 keV). LED's would be another possibility.

In addition to the source calibration, one needs to perform a gain calibration. This is achieved by measuring the distance between the first pixel peak and the pedestal. Typically random triggers with noise hits can be used here. In processing electronics of the signal one needs a preamplifier with two different amplifications, a high amplification for the gain calibration to obtain the highest precision and low amplification for normal operations to achieve the highest dynamic range. The two amplification scales need to be cross calibrated. Here, one can use a gamma source such as Cobalt-57, which emits a 122-keV photon, and measure the response with the two amplification scales of the preamplifier. (The energy of the photon needs to be sufficiently smaller than 511 keV, so it falls into the dynamic range of the two preamplifier settings).

Moreover, the light yield of the scintillators and the gain of the detector are affected temperature and voltage changes. Therefore, the power supply of the tomography apparatus is preferably stabilized in order to avoid variations in the light yield of the scintillators and the gain of the detector.

Finally, it should be noted that the images generated by the positron emission tomography apparatus according to the invention can be combined with images generated by other tomography techniques, e.g. magnetic resonance imaging (MRI) or computer tomography (CT).

The invention and its particular features and advantages will become more apparent from the following detailed description considered with reference to the accompanying drawings.

### Brief description of the drawings

- Figure 1A: is a schematic view of a cross section of a multi-layer detector ring according to the invention.
- Figure 1B: is a longitudinal sectional view of the detector ring of Figure 1A.
- Figure 1C: is an illustration showing primary photon detections only.
- Figure 1D: is an illustration showing primary photon detections and secondary photon detections caused by Compton-scattering.
- Figure 2: is a schematic side view of a detector arrangement comprising three pairs of a scintillator and an associated photodetector.
- Figure 3A: is a perspective view of another detector ring.
- Figure 3B: is a longitudinal sectional view of the detector ring of Figure 3A.
- Figure 4A-4C: are flowcharts illustrating the operating method according to the invention.
- Figure 5: shows a conventional detector arrangement according to the prior art.

### Detailed description of the drawings

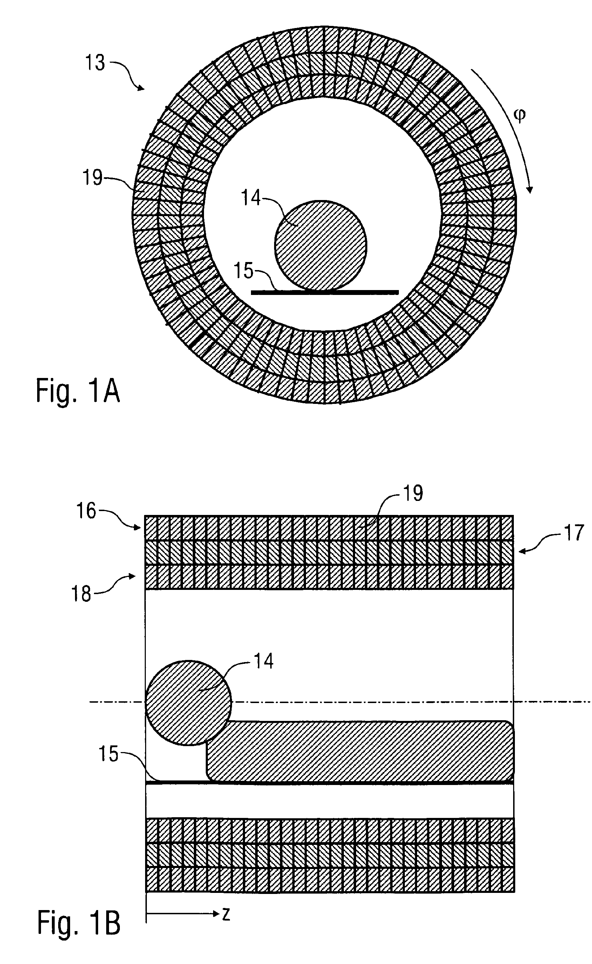

Figures 1A-1D illustrate a detector ring 13 surrounding a patient 14 on a patient bed 15, wherein the detector ring 13 comprises three layers 16, 17, 18 of scintillator crystals 19 and associated photodetectors, wherein the photodetectors are pixelated avalanche photodetectors operated in the Geiger-mode.

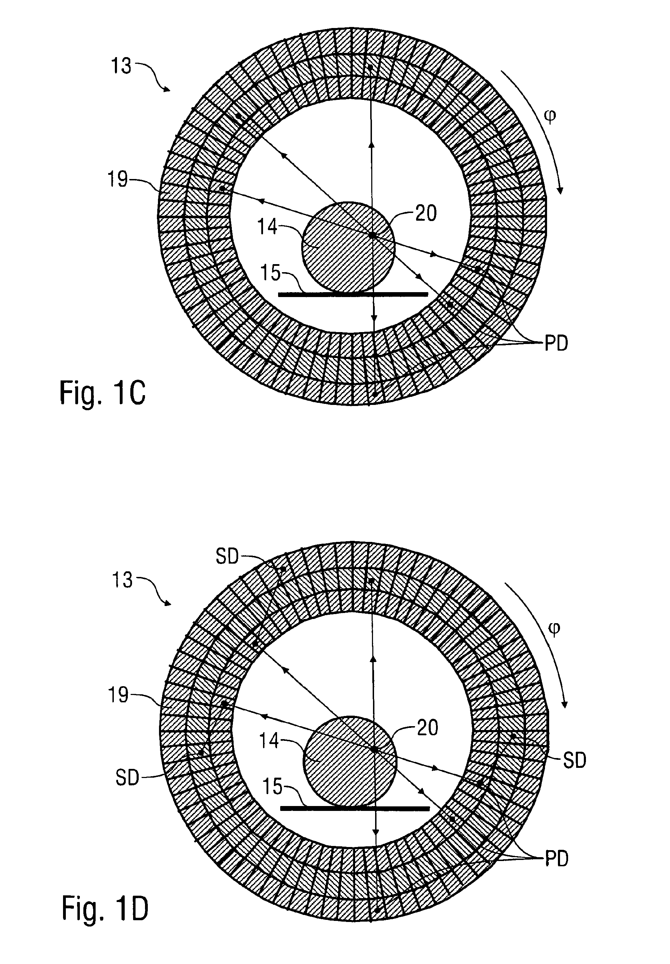

Figure 1C illustrates a positron-electron annihilation 20 within the patient 14 resulting in the generation of a pair of Gamma photons which are irradiated in opposing directions. Further, the drawing shows primary photon detections PD in the individual layers 16-18 of the detector rings 13, i.e. photon detections with an energy corresponding to the annihilation energy of 511 keV.

Further, Figure 1D illustrates both primary photon detections PD and secondary photon detections SD caused by Compton-scattering in the inner layers 17 or 18 of the detector ring 13. It has to be noted that the Gamma photons generated by the positron-electron annihilation 20 in the patient 14 are Compton-scattered in the inner layer 18 and also in the middle layer 17 of the detector ring 13 so that the corresponding primary photon detections PD indicate an energy of less than the specific annihilation energy of 511 keV. However, the energy of the secondary photon detections SD is measured and it is determined whether the sum of the energies of the primary photon detection PD and the associated secondary photon detection SD corresponds to the specific annihilation energy of 511 keV. If so, the positions of the primary photon detections PD are saved for a later image analysis which can be performed in conventional manner.

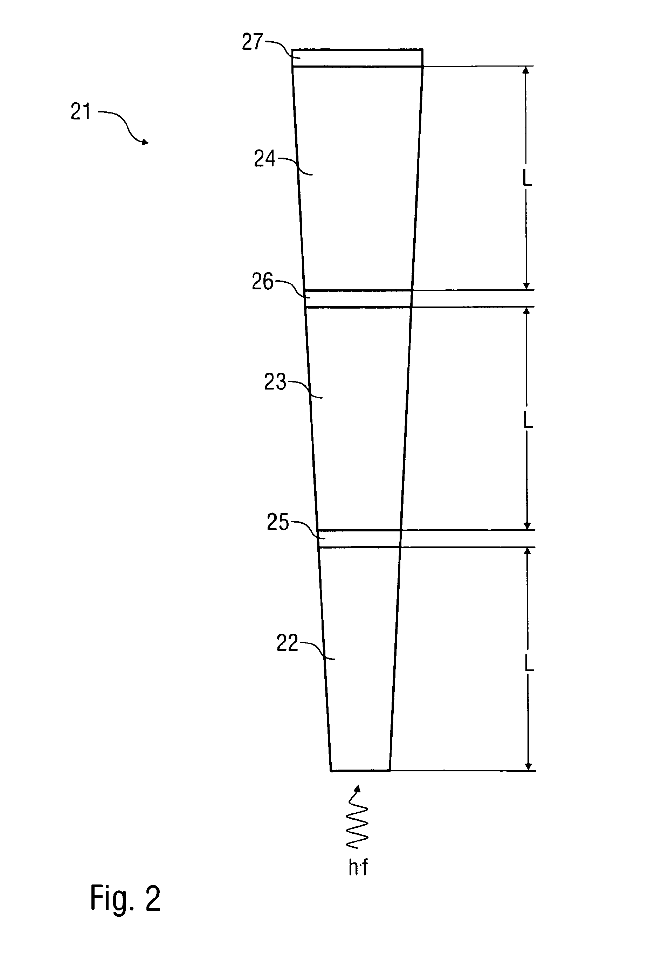

Figure 2 shows a schematic illustration of a detector arrangement 21, comprising three pairs of a scintillator crystal 22-24 and an associated avalanche photodiode 25-27.

The detector ring 13 as shown in Figures 1A-1D is assembled from a plurality of the detector arrangements 21. In this connection it should be noted that the scintillator crystals 22-24 have a cross section in the form of a trapezoid so that there are no optically inactive gaps between the adjacent detector arrangements 21 in the detector ring 13.

It should further be noted that an optical pattern comprising black spots in well-defined positions is painted on the side surfaces of the scintillator crystals 22-24 of the detector arrangements 21 thereby homogenizing the response of the scintillator crystals 22-24.

Further, a white diffuse reflector layer is painted onto the side surfaces of the scintillator crystals 22-24 thereby providing an optical insulation between the adjacent detector arrangements 21 in the detector ring.

In this embodiment, the individual scintillator crystals 22-24 each has a length of L = 1.6 cm. However, other arrangements with different dimensions are possible within the framework of the invention.

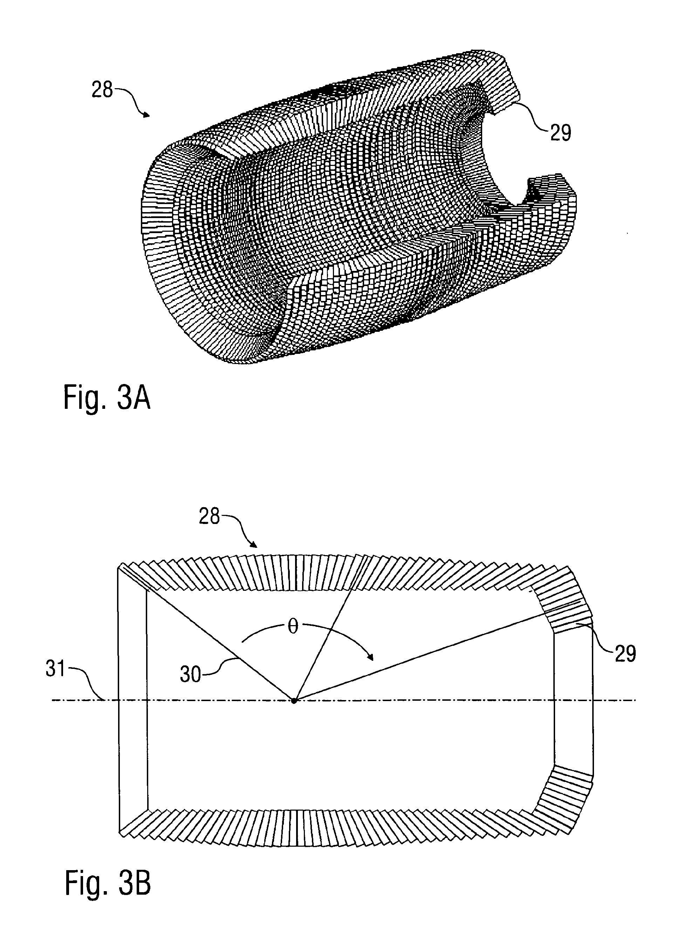

Figure 3A shows an alternative embodiment of a detector ring 28 comprising a plurality of detector arrangements 29 which are distributed both along the circumference of the detector ring 28 and along the length of the detector ring 28.

The individual detector arrangements 29 each comprise three pairs of a scintillator crystal and an associated photodetector in the form of a pixelated avalanche photodetector operated in the Geiger-mode.

Further, it should be noted that the individual detector arrangements 29 are projective with regard to an azimuth angle of the detector ring 28, i.e. the individual detector arrangements 29 comprise optical axes 30 intersecting a centre axis 31 of the detector ring. However, the detectors can also be projective in the polar direction.

Moreover, the optical axes 30 of the detector arrangements 29 intersect in the same cross section 32 of the detector ring 28.

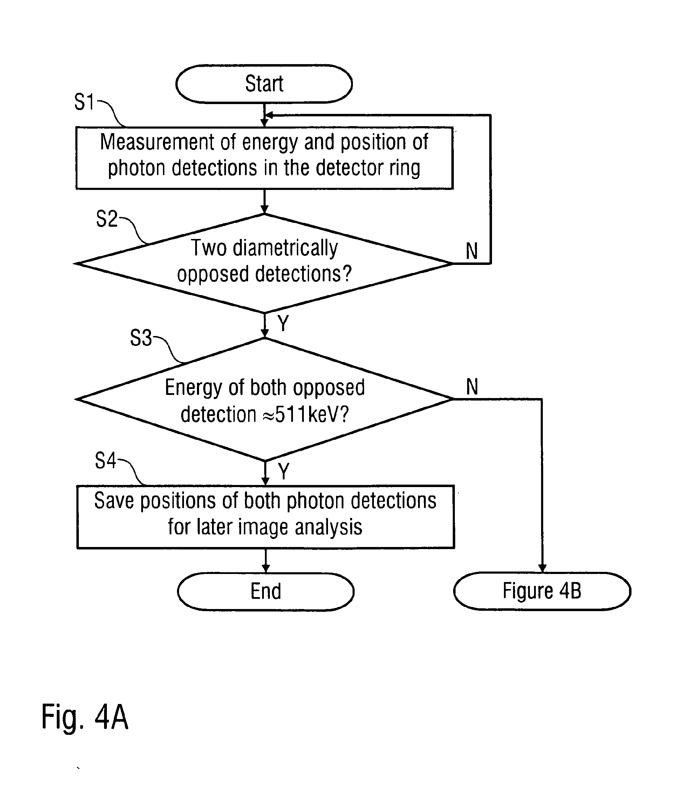

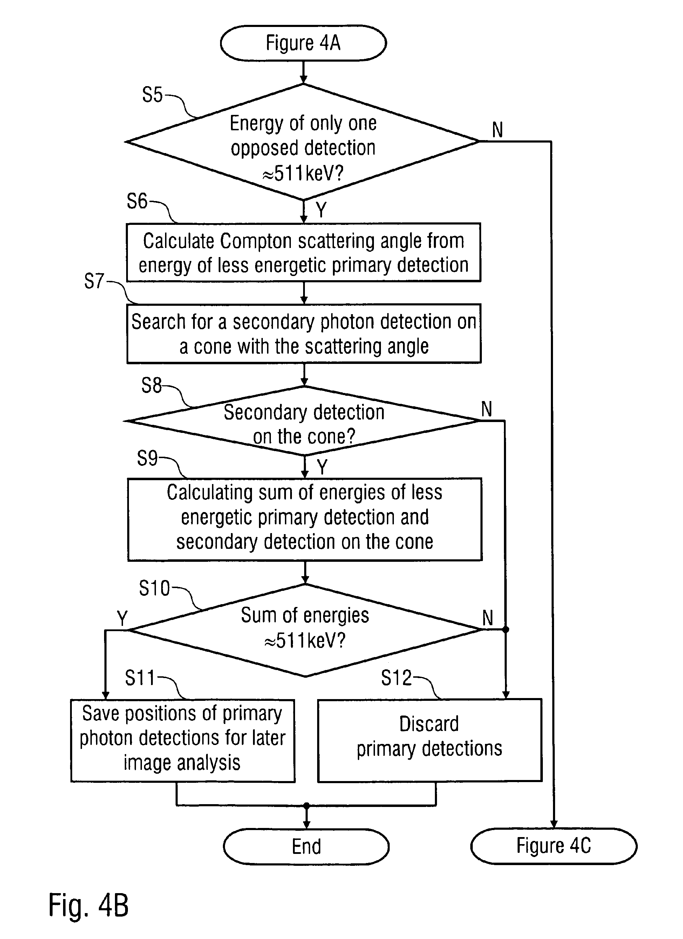

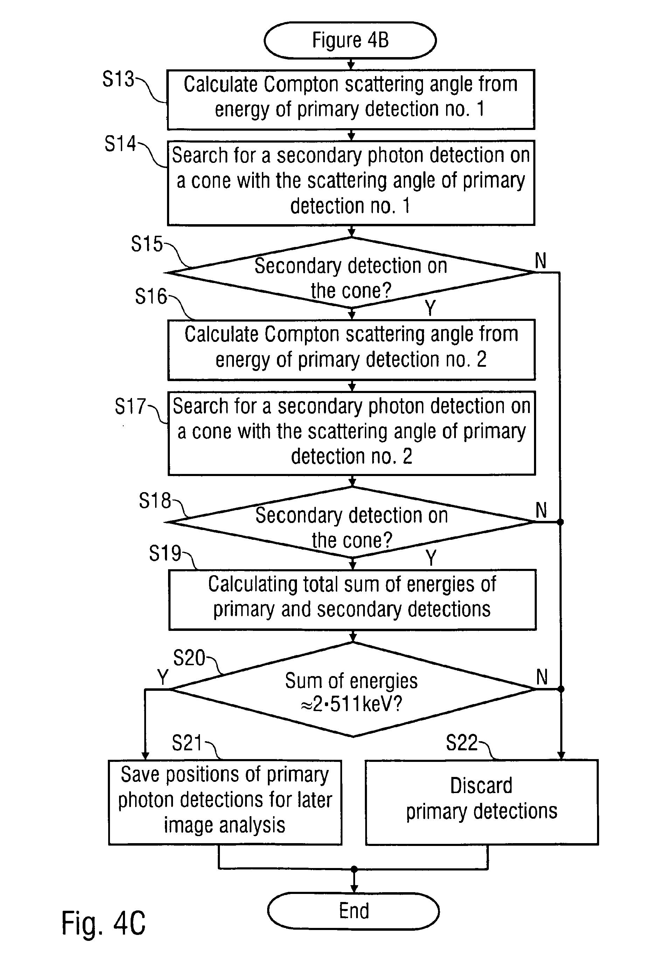

Finally, Figures 4A-4C illustrate the operating method according to the invention, wherein steps S1-S4 as shown in Figure 4A are performed in conventional positron emission tomography apparatuses, whereas steps S5-S22 as shown in Figures 4B and 4C are improvements of the invention over the state of the art.

In step S1, the energy and position of primary photon detections in the detector ring is measured.

Then, in step S2, it is determined whether there are two diametrically opposite primary photon detections indicating that the corresponding Gamma photons stem from a positron-electron annihilation.

If so, it is determined in step S3 whether the energy of both opposite photon detections corresponds to the annihilation energy of 511 keV.

If so, the positions of both primary photon detections are saved in step S4 for a later image analysis which can be performed in a conventional manner.

Otherwise, it is determined in step S5 whether only one of the opposite primary photon detections comprises the annihilation energy of 511 keV.

If so, the corresponding Compton-scattering angle is calculated from the energy of the less energetic primary detection in step S6. In this connection, it should be noted that the Compton-scattering angle is related to the energy difference between the annihilation energy on the one hand and the energy of the primary photon detection on the other hand.

Then, in step S7 a secondary photon detection is searched on a cone comprising the calculated Compton-scattering angle.

In step S8, it is determined whether there is a secondary photon detection on the cone.

If so, step S9 calculates the sum of the energies of the less energetic primary photon detection and the secondary photon detection on the cone.

In step S10, it is determined whether the sum of these energies corresponds to the annihilation energy of 511 keV ±60 keV.

If so, the positions of the primary photon detections are saved in step S11 for a later image analysis.

Otherwise, the primary photon detections are discarded in step S12 since they are probably not caused by a positron-electron annihilation.

However, if none of the primary photon detections comprises the specific annihilation energy of 511 keV, the Compton-scattering angle is determined for both less energetic primary photon detections (steps S13, S16) and it is searched for a secondary photon detection on a cone with the scattering angle (steps S14, S17).

If two secondary photon detections occur on the cones corresponding to the calculated Compton-scattering angles, step S19 calculates the total sum of the energies of the primary photon detections and the secondary photon detections.

In step S20, it is determined whether the sum of these energies equals the double of the specific annihilation energy of 511 keV ±60 keV.

If so, the positions of the primary photon detections are saved in step S21 for a later image analysis.

Otherwise, the primary photon detections are discarded in step S22.

Although the invention has been described with reference to the particular arrangement of parts, features and the like, these are not intended to exhaust all possible arrangements of features, and indeed many other modifications and variations will be ascertainable to those of skill in the art.

### List of reference numerals:

- 1: Detector arrangement
- 2: Scintillator crystal
- 3: Photodiode
- 4: Reflector fabric
- 5: Aluminum foil
- 6: Mylar foil
- 7: Compartment
- 8: Frame
- 9: Preamplifier board
- 10: Diode carrier plate
- 11: Output cable
- 12: Fibre optical cable
- 13: Detector ring
- 14: Patient
- 15: Patient bed
- 16-18: Layers
- 19: Scintillator crystal
- 20: Positron-electron annihilation
- 21: Detector arrangement
- 22-24: Scintillator crystal
- 25-27: Pixelated avalanche photodiode operated in the Geiger mode
- 28: Detector ring
- 29: Detector arrangements
- 30: Optical axes of the detector arrangements
- 31: Centre axis
- 32: Cross section of the detector ring
- PD: Primary photon detection
- SD: Secondary photon detection

## Claims

1. Detector arrangement (21; 29) for a tomographic imaging apparatus, particularly for a positron emission tomograph, **characterized by** at least two sandwiched pairs of a scintillator (22-24) and an associated pixelated avalanche photodetector (25-27) operated in the Geiger-mode, wherein the pairs are sandwiched along a direction of detection.

2. Detector arrangement (21; 29) according to claim 1, wherein
a) the detector arrangement (21; 29) tapers along its direction of detection so that a plurality of the detector arrangements (21; 29) can be assembled to form a detector ring (13; 28) without any optically inactive gaps between the adjacent detector arrangements, and/or
b) the scintillators (22-24) each comprises a cross section in the form of a trapezoid or a hexagon, and/or
c) the detector arrangement comprises a high granularity.

3. Detector arrangement (21; 29) according to one of the preceding claims, **characterized by** an optical insulation for optically insulating the detector arrangement (21; 29) from an adjacent detector arrangement (21; 29) in a detector ring (13; 28) which is assembled from a plurality of the detector arrangements (21; 29).

4. Detector arrangement (21; 29) according to claim 3, wherein the optical insulation comprises a diffuse reflector on the opposing side surfaces of the scintillators (22-24).

5. Detector arrangement (21; 29) according to claim 3 or claim 4, wherein the optical insulation comprises
a) a diffusely reflecting paint on the opposing side surfaces of the scintillators, and/or
b) a cladding made of a fabric, particularly a fabric made of Tyvek ^{Ⓡ}, and/or
c) an enhanced surface roughness of the opposing side surfaces of the scintillators, and/or
d) nanocrystals on the opposing side surfaces of the scintillators.

6. Detector arrangement (21; 29) according to one of the preceding claims, wherein the side surfaces of the scintillators (22-24) comprise an optical pattern which homogenizes the response of the scintillators (22-24).

7. Detector arrangement (21; 29) according to claim 6, wherein
a) the optical pattern comprises a surface treatment to achieve a uniform response, particularly in the form of black spots, and/or
b) the optical pattern is arranged between the scintillators (22-24) and the optical insulation.

8. Detector arrangement (21; 29) according to one of the preceding claims, wherein
a) at least one of the scintillators (22-24) may comprise a shorter decay time than the other scintillators (22-24) thereby facilitating a precise run-time calculation, and/or
b) the inner scintillators (22) may comprise a shorter decay time than the outer scintillators (24) in order to reduce the coincidence time between the back-to-back annihilation photons and to improve the position determination of their production point, and/or
c) the shorter decay time of the scintillators (22-24) is less than 5ns, particularly about 1ns, and/or
d) the longer decay time of the scintillators (22-24) is more than 20ns, particularly in the range of 20ns-50ns.

9. Detector ring (13; 28) for a tomographic imaging apparatus, particularly for a positron emission tomograph, comprising several detector arrangements (21; 29) according to one of the preceding claims being arranged along the circumference of the detector ring (13; 28) so that the detector ring (13; 28) comprises several layers of scintillators (22-24) and associated photodetectors (25-27).

10. Detector ring (13; 28) according to claim 9, wherein
a) the individual detector arrangements (21; 29) are projective with regard to an azimuth angle (φ) of the detector ring (13; 28), and/or
b) the individual detector arrangements (21; 29) may be projective with regard to a polar angle (θ) of the detector ring (13; 28).

11. Tomographic imaging apparatus, particularly for a positron emission tomograph, comprising a detector ring (13; 28) according to one of claims 9 or 10.

12. Operating method for a tomographic imaging apparatus, particularly for a positron emission tomograph, comprising the following steps:
a) Determining the positions and energies of diametrically opposite primary photon detections (PD), wherein the determination is made by means of a pixelated avalanche photodetector operated in the Geiger-mode,
b) saving the positions of the diametrically opposite primary photon detections (PD) for a later image analysis if both diametrically opposite primary photon detections (PD) comprise a predetermined annihilation energy,
**characterized by** the following steps which are performed if only one of the diametrically opposite photon detections comprises the predetermined annihilation energy:
c) Determining the positions and energies of secondary photon detections (SD) caused by Compton-scattering of the less energetic primary photon, wherein the determination is made by means of a pixelated avalanche photodetector operated in the Geiger-mode, particularly by a multi-pixel photo counter or by a silicon photomultiplier,
d) saving the positions of the diametrically opposite primary photon detections (PD) if the sum of the energies of the less energetic primary photon detection (PD) and the secondary photon detection (SD) equals the predetermined annihilation energy.

13. Operating method according to claim 12, further comprising the following steps which are performed if none of the diametrically opposite primary photon detections (PD) comprises the predetermined annihilation energy:
a) Determining the positions and energies of secondary photon detections (SD) caused by Compton-scattering of both primary photons,
b) calculating the total sum of the energies of both primary photon detections (PD) and both secondary photon detections (SD) ,
c) saving the positions of the diametrically opposite primary photon detections (PD) if the total sum of the energies equals the double of the predetermined annihilation energy.

14. Operating method according to claims 12 or 13, further comprising the following steps for determining the secondary photon detections (SD):
a) Calculating an energy difference between the predetermined annihilation energy on the one hand and the energy of the primary photon detection (PD) having an energy different from the predetermined annihilation energy on the other hand,
b) calculating a Compton-scattering angle based on the energy difference,
c) Determining a cone surrounding the flight path of the less energetic primary photon before its detection wherein the cone corresponds to the Compton-scattering angle,
d) Searching for the secondary photon detection (SD) on the cone only.

15. Operating method according to one of claims 12 to 14, further comprising the following steps:
Calibrating the apparatus without a patient by inserting a source of radiation and measuring data.

16. Operating method according to claim 15, comprising the following steps:
a) Measuring saturation curves of the pixelated avalanche photodetector for different ambient temperatures and/or different sources of radiation,
b) Saving the measured saturation curves of the pixelated avalanche photodetector,
c) Use of the tomographic imaging apparatus for examining a patient,
d) Correction of the measurements of the patient taking into account the saturation curves.

17. Operating method according to claim 16, wherein the different radiation sources are selected from a group consisting of:
a ) ¹³⁷Caesium,
b) ²²Sodium,
c) ⁵⁷Cobalt,
d) ¹¹³Tin,
e) ¹³³Barium

18. Operating method according to one of claims 12 to 15, further comprising the following step:
a) Measuring an ambient temperature and considering the ambient temperature to avoid temperature variations of the light yield of the scintillators and/or the gain of the avalanche photodetector, and/or
b) Stabilizing a power supply of the tomography apparatus to avoid variations of the gain of the avalanche photodetector, and/or
c) Adjusting a bias voltage automatically due to temperature changes to ensure operation at the same gain..

## Amended claims

### Amended claims in accordance with Rule 137(2) EPC.

**1.** Detector arrangement (21; 29) for a tomographic imaging apparatus, particularly for a positron emission tomograph, comprising at least two sandwiched pairs of a scintillator (22-24) and an associated pixelated avalanche photodetector (25-27), wherein the pairs are sandwiched along a direction of detection, **characterized in that** the pixelated avalanche photodetectors (25-27) are multi-pixel photon counters operated in the Geiger mode.

**2.** Detector arrangement (21; 29) according to claim 1, wherein
a) the detector arrangement (21; 29) tapers along its direction of detection so that a plurality of the detector arrangements (21; 29) can be assembled to form a detector ring (13; 28) without any optically inactive gaps between the adjacent detector arrangements, and/or
b) the scintillators (22-24) each comprises a cross section in the form of a trapezoid or a hexagon.

**3.** Detector arrangement (21; 29) according to one of the preceding claims, **characterized by** an optical insulation for optically insulating the detector arrangement (21; 29) from an adjacent detector arrangement (21; 29) in a detector ring (13; 28) which is assembled from a plurality of the detector arrangements (21; 29).

**4.** Detector arrangement (21; 29) according to claim 3, wherein the optical insulation comprises a diffuse reflector on the opposing side surfaces of the scintillators (22-24).

**5.** Detector arrangement (21; 29) according to claim 3 or claim 4, wherein the optical insulation comprises
a) a diffusely reflecting paint on the opposing side surfaces of the scintillators, and/or
b) a cladding made of a fabric, particularly a fabric made of Tyvek^{®}, and/or
c) an enhanced surface roughness of the opposing side surfaces of the scintillators, and/or
d) nanocrystals on the opposing side surfaces of the scintillators.

**6.** Detector arrangement (21; 29) according to one of the preceding claims, wherein the side surfaces of the scintillators (22-24) comprise an optical pattern which homogenizes the response of the scintillators (22-24).

**7.** Detector arrangement (21; 29) according to claim 6, wherein
a) the optical pattern comprises a surface treatment to achieve a uniform response, particularly in the form of black spots, and/or
b) the optical pattern is arranged between the scintillators (22-24) and the optical insulation.

**8.** Detector arrangement (21; 29) according to one of the preceding claims, wherein
a) at least one of the scintillators (22-24) may comprise a shorter decay time than the other scintillators (22-24) thereby facilitating a precise run-time calculation, and/or
b) the inner scintillators (22) may comprise a shorter decay time than the outer scintillators (24) in order to reduce the coincidence time between the back-to-back annihilation photons and to improve the position determination of their production point, and/or
c) the shorter decay time of the scintillators (22-24) is less than 5ns, particularly about 1ns, and/or
d) the longer decay time of the scintillators (22-24) is more than 20ns, particularly in the range of 20ns-50ns.

**9.** Detector ring (13; 28) for a tomographic imaging apparatus, particularly for a positron emission tomograph, comprising several detector arrangements (21; 29) according to one of the preceding claims being arranged along the circumference of the detector ring (13; 28) so that the detector ring (13; 28) comprises several layers of scintillators (22-24) and associated photodetectors (25-27).

**10.** Detector ring (13; 28) according to claim 9, wherein
a) the individual detector arrangements (21; 29) are projective with regard to an azimuth angle (ϕ) of the detector ring (13; 28), and/or
b) the individual detector arrangements (21; 29) may be projective with regard to a polar angle (θ) of the detector ring (13; 28).

**11.** Tomographic imaging apparatus, particularly for a positron emission tomograph, comprising a detector ring (13; 28) according to one of claims 9 or 10.

**12.** Operating method for a tomographic imaging apparatus according to claim 11, particularly for a positron emission tomograph, comprising the following steps:
a) Determining the positions and energies of diametrically opposite primary photon detections (PD), wherein the determination is made by means of a pixelated avalanche photodetector operated in the Geiger-mode,
b) saving the positions of the diametrically opposite primary photon detections (PD) for a later image analysis if both diametrically opposite primary photon detections (PD) comprise a predetermined annihilation energy,
**characterized by** the following steps which are performed if only one of the diametrically opposite photon detections comprises the predetermined annihilation energy:
c) Determining the positions and energies of secondary photon detections (SD) caused by Compton-scattering of the less energetic primary photon, wherein the determination is made by means of a multi-pixel photon counter operated in the Geiger-mode,
d) saving the positions of the diametrically opposite primary photon detections (PD) if the sum of the energies of the less energetic primary photon detection (PD) and the secondary photon detection (SD) equals the predetermined annihilation energy.

**13.** Operating method according to claim 12, further comprising the following steps which are performed if none of the diametrically opposite primary photon detections (PD) comprises the predetermined annihilation energy:
a) Determining the positions and energies of secondary photon detections (SD) caused by Compton-scattering of both primary photons,
b) calculating the total sum of the energies of both primary photon detections (PD) and both secondary photon detections (SD),
c) saving the positions of the diametrically opposite primary photon detections (PD) if the total sum of the energies of each side equals the predetermined annihilation energy.

**14.** Operating method according to claims 12 or 13, further comprising the following steps for determining the secondary photon detections (SD):
a) Calculating an energy difference between the predetermined annihilation energy on the one hand and the energy of the primary photon detection (PD) having an energy different from the predetermined annihilation energy on the other hand,
b) calculating a Compton-scattering angle based on the energy difference,
c) Determining a cone surrounding the flight path of the less energetic primary photon before its detection wherein the cone corresponds to the Compton-scattering angle,
d) Searching for the secondary photon detection (SD) on the cone only.

**15.** Operating method according to one of claims 12 to 14, further comprising the following steps:
Calibrating the apparatus without a patient by inserting a source of radiation and measuring data.

**16.** Operating method according to claim 15, comprising the following steps:
a) Measuring saturation curves of the pixelated avalanche photodetector for different ambient temperatures and/or different sources of radiation,
b) Saving the measured saturation curves of the pixelated avalanche photodetector,
c) Use of the tomographic imaging apparatus for examining a patient,
d) Correction of the measurements of the patient taking into account the saturation curves.

**17.** Operating method according to claim 16, wherein the different radiation sources are selected from a group consisting of:
a) ¹³⁷Caesium,
b) ²²Sodium,
c) ⁵⁷Cobalt,
d) ¹¹³Tin,
e) ¹³³Barium

**18.** Operating method according to one of claims 12 to 15, further comprising the following step:
a) Measuring an ambient temperature and considering the ambient temperature to avoid temperature variations of the light yield of the scintillators and/or the gain of the avalanche photodetector, and/or
b) Stabilizing a power supply of the tomography apparatus to avoid variations of the gain of the avalanche photodetector, and/or
c) Adjusting a bias voltage automatically due to temperature changes to ensure operation at the same gain..
